# EUROPEAN PATENT APPLICATION

(11) **EP 2 845 712 A1**
(43) Date of publication of application: **11.03.2015**
(21) Application number: 13183322.0
(22) Date of filing: 06.09.2013
(51) Int. Cl.: B29C 45/73

(54) **Devices for diverting fluid channels**

(71) Applicant: Michael Lundbech A/S, 4100 Ringsted (DK)
(72) Inventor: Lundbech, Michael René, 4100 Ringsted (DK)
(74) Representative: Plougmann & Vingtoft A/S

(57) **Abstract**

A cooling member such as a cooling plate for use in an injection mould, has first and second cooling channels for conducting a cooling fluid, and a well extends from a surface of the cooling member and into the cooling member. The first and second cooling channels each have cooling channel portions on either side of the well and corresponding openings in a side wall of the well, where extensions of the first and second cooling channels may intersect in the well. A diverting device is arranged in the well and has a first diverting device channel for establishing fluid communication between cooling channel portions of the first cooling channel on either side of the well, and a second diverting device channel for establishing fluid communication between cooling channel portions of the second cooling channel on either side of the well. The diverting device has no fluid communication between the first and second device channels.

## Description

### FIELD OF THE INVENTION

This invention relates to devices for diverting a plurality of streams of fluid flowing in fluid channels and in particular to injection moulding of thermoplastic materials and cooling of the injection mould.

### BACKGROUND OF THE INVENTION

Injection moulds can be composed of several modules including cooling members or modules for cooling the mould. Injection moulds, and cooling members in particular, often have cooling channels for conducting a cooling fluid such as water for cooling the mould. Cooling members can be plates with drilled cooling channels parallel to the faces of the member. With today's technique, if cooling channels are to cross each other, they must be located at different planes above each other, or separate cooling plates must be used, both of which add thickness to the mould, and the cooling efficiency of cooling channels at different distances from the "core" to be cooled decreases with the distance.

### SUMMARY OF THE INVENTION

The invention solves this problem by providing a device comprising a well extending from a surface of the device and into the device, first and second channels suitable for conducting a fluid, the first and second channels each having channel portions on either side of the well and corresponding openings in a side wall of the well, where extensions of the first and second channels intersect in the well, and a diverting device inserted in the well. The diverting device has a first diverting device channel for establishing fluid communication between channel portions of the first channel on either side of the well, and a second diverting device channel for establishing fluid communication between channel portions of the second channel on either side of the well. The diverting device has no fluid communication between the first and second device channels.

The device is particularly useful when the extensions of the first and second cooling channels cross each other in the well. A device in the form of a plate shaped member is further advantageous, since it is particularly useful for cooling injection moulds. A device in the form of a plate can have a reduced thickness in comparison with traditional cooling plates because it can in some applications replace two cooling plates. With the invention the fluid channels can all be arranged in the same plane and thus have the same distance from the moulding core, whereby the cooling precision and efficiency are increased.

The device of the invention can have two or more fluid channels intersecting in the same well, and accordingly, the diverting device inserted in the well can have a corresponding number of diverting device channels crossing each other at different levels and with walls between them.

The invention also provides a diverting device for insertion into the well of a device according to the invention. The diverting has a first diverting device channel for establishing fluid communication between channel portions of the first channel on either side of the well, and a second diverting device channel for establishing fluid communication between channel portions of the second channel on either side of the well. The diverting device has no fluid communication between the first and second device channels.

A diverting device wherein the diverting device channels cross each other at different levels and with a wall between them is preferred. The diverting device is preferably sealed against the side wall of the well to prevent leakage of cooling fluid to the outside and also to prevent leakage between fluid channels. The diverting device must be able to resist working temperatures occurring in contemplated use and it can be made by moulding e.g. of a thermoplastic material or metal, or by machining such materials.

Further, in a diverting device according to the invention the diverting device has aligning means for interaction with corresponding aligning means in the well so as to align the first and second device channels with respective ones of the first and second cooling channels.

Although the invention is particularly useful as cooling member(s) for cooling an injection mould, e.g. for moulding thermoplastic materials and die casting of metals where the fluid is a cooling fluid such as water or gas, other uses for conducting fluids in fluid channels which cross each other are possible. Thus, the invention may also be used for heating or thermostatic purposes, or for other purposes where diverting one or more fluid streams is desired.

Contemplated general uses of the invention is for transporting and distributing fluid streams such as crossing or diverting fluid streams in machines in general e.g. in internal combustion engines, and complex patterns of fluid channels can thereby be obtained.

The invention can have two or more, such as three or four, fluid channels crossing each other in the diverting device without fluid communication between the fluid channels. Also, the fluid channels may cross each other at other angles than an even distribution of 360 degrees. The fluid channels need not have the same cross sectional area, and they can conduct different fluid media according to specific needs. The fluid channels also need not intersect or cross each other in the well and can be at different levels or the same level, and the insert may then be used for diverting and selectively changing the connections between the fluid channels.

When the diverting device is inserted in the well it can be held in place in the well by another structure or element mounted against the element with the well, or the diverting device can have means for securing it in the well such as a flange which seals against the surface from which the well extends.

### BRIEF DESCRIPTION OF THE DRAWINGS

Figure 1 is a plan view of a device according to the invention,
Figure 2 is a cross section of the device in figure 1 along the line A-A,
Figure 3 is a cross section of the device in figure 1 along the line B-B,
Figure 4 is a plan view of a diverting device according to the invention,
Figure 5 is a cross section of the diverting device in figure 4 along the line A-A,
Figure 6 is a cross section of the diverting device in figure 4 along the line B-B,
Figure 7 is a perspective view of the diverting device in figure 4 with a 90 degrees sector cut away.

### DETAILED DESCRIPTION OF AN EMBODIMENT

The devices shown in the drawings are examples of the invention intended for use as cooling devices for cooling an injection mould.

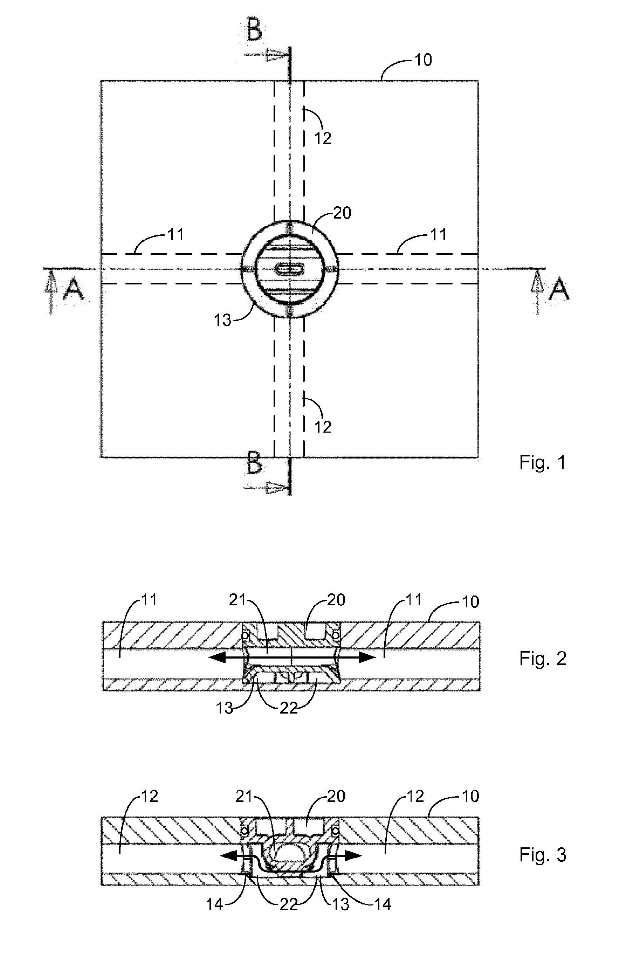

Figures 1, 2 and 3 show a cooling plate 10 for use as a cooling member for use in close connection with an injection mould and cooling the injection mould, e.g. for moulding thermoplastic materials. The cooling plate has a first channel 11 and a second channel 12 extending transversally to the first channel 11, which each is suitable for conducting a cooling fluid such as water or gas. The cooling plate 10 has a well 13 extending from a surface of the cooling plate and into the cooling plate. A diverting device 20 is inserted in the well 13.

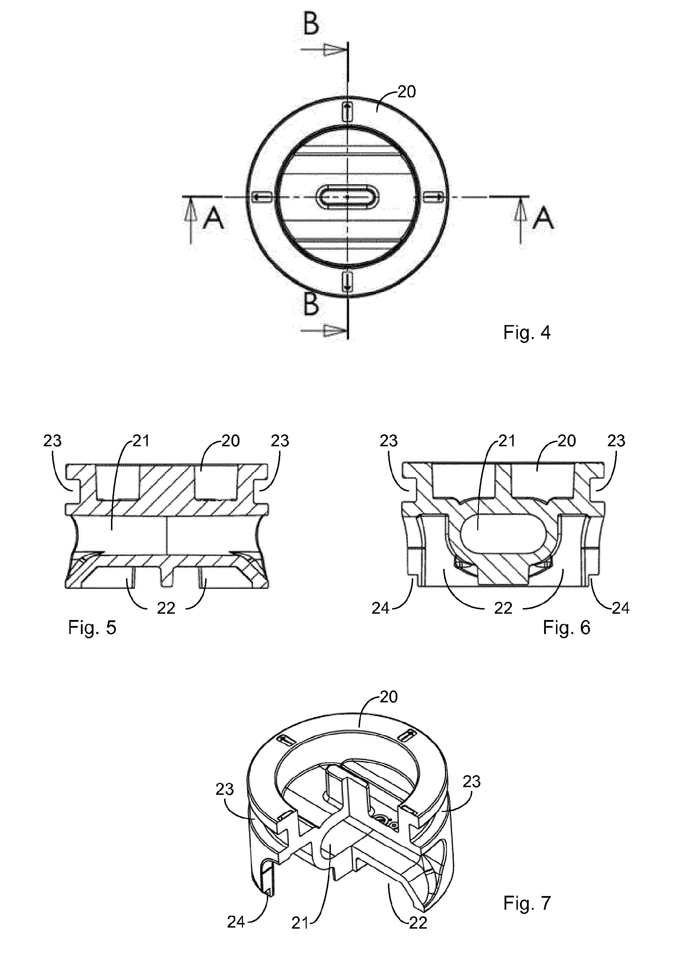

Figures 4, 5, 6 and 7 show details of the diverting device 20. The diverting device 20 has a first diverting device channel 21, and as shown in Figure 2 where the diverting device in inserted in the cooling plate 10, the first diverting device channel 21 is aligned with the first channel 11 in the cooling plate 10 and thereby establishing fluid communication between channel portions of the first channel 11 on either side of the well 13.

The diverting device 20 further has a second diverting device channel 22, and as shown in Figure 3 the opposite ends of the second diverting device channel 22 are aligned with the second channel 12 in the cooling plate 10 and thereby establishing fluid communication between channel portions of the first channel 12 on either side of the well 13. In Figure 2 the double-head arrow indicates a first flow path of fluid through the first channel 11 and first diverting device channel 21, and in Figure 3 the double-head arrow indicates a second flow path of fluid through the second channel 12 and first diverting device channel 22. Figures 2, 3, 5, 6 and 7 show that the second diverting device channel 22 passes below the first diverting device channel 21 with a partition wall between the first and second diverting device channels. These figures also show that the "bottom" of the diverting device 20 is open whereby the second diverting device channel 22 is partially delimited by the bottom of the well 13. In another embodiment the well can be a through-going hole whereby the open second diverting device channel 22 will be closed by a neighbouring structure of the mould.

In Figures 2, 3, 5, 6 and 7 is illustrated that the cross section of the first diverting device channel 21 is flattened and wider than the cross section of the first channel 11 in the cooling plate 10, whereby the cross sectional area of the first diverting device channel 21 is substantially the same as the cross sectional area of the first channel 11 in the cooling plate 10, or the first diverting device channel have flow resistances per unit length about the same as the flow resistances per unit length of the first and second channels.

For sealing against the wall of the well the diverting device 20 has a groove 23 for receiving a sealing device such as an O-ring as seen in figures 2 and 3. A sealing ring may also be provided around each of the diverting device channels, e.g. laid into a groove with a suitable contour in the outer surface or by two-component moulding, or around the openings of the channels in the wall of the well.

In order to ensure proper angular alignment of the first and second diverting device channels 21 and 22 with corresponding first and second channels 11 and 12 in the cooling plate 10 the diverting device 20 may have a non-circular outer contour. In case of two cooling channels 11, 12 the outer contour can advantageously be a square, possibly with rounded corners. In the rotational symmetric configuration shown here the diverting device 20 has one or more recesses 24 in its outer surface for cooperating with corresponding protrusions in the well 13 - or vice versa.

In an embodiment, instead of, or in addition to, establishing fluid communication between aligned channel portions as shown in Figures 1-3, the diverting device may establish fluid communication between non-aligned channel portions such as portions of channels 11 and 12 in figure 1, and/or between channel portions at different levels below the surface in which the well is formed.

## Claims

1. A device comprising
- a well extending from a surface of the device and into the device,
- first and second channels suitable for conducting a fluid, the first and second channels each having channel portions on either side of the well and corresponding openings in a side wall of the well, and
- a diverting device inserted in the well, the diverting device having a first diverting device channel for establishing fluid communication between channel portions of the first channel on either side of the well, and a second diverting device channel for establishing fluid communication between channel portions of the second channel on either side of the well, the diverting device having no fluid communication between the first and second device channels.

2. A device according to claim 1 wherein extensions of the first and second channels intersect in the well

3. A device according to claim 1 wherein extensions of the first and second channels cross each other in the well.

4. A device according to any one of claims 1-3 wherein the device is a plate shaped member with the first and second channels parallel to the surface.

5. A diverting device for insertion into the well of a device according to any one of claims 1-4, the diverting device having a first diverting device channel for establishing fluid communication between channel portions of the first channel on either side of the well, and a second diverting device channel for establishing fluid communication between channel portions of the second channel on either side of the well, the diverting device having no fluid communication between the first and second device channels.

6. A diverting device according to claim 5 wherein the diverting device channels cross each other at different levels and with a wall between them.

7. A diverting device according to any one of claims 5-6 wherein the diverting device is sealed against the side wall of the well.

8. A diverting device according to any one of claims 5-7 wherein the diverting device has aligning means for interaction with corresponding aligning means in the well so as to align the first and second diverting device channels with respective ones of the first and second cooling channels.

9. A diverting device according to any one of claims 5-8 wherein the first and second diverting device channels have flow resistances per unit length about the same as the flow resistances per unit length of the first and second channels.

10. A cooling plate for use in a device according to any one of claims 1-4, the cooling plate having first and second cooling channels for conducting a cooling fluid, and a well for receiving a diverting device according to any one of claims 4-8, the well extending from a surface of the cooling member and into the cooling member, the first and second cooling channels each having cooling channel portions on either side of the well and corresponding openings in a side wall of the well.

11. A cooling plate according to claim 10 wherein extensions of the first and second cooling channels intersect in the well.

12. Use of a device according to any one of claims 1-4 for cooling an injection mould wherein the fluid is a cooling fluid.
